# EUROPEAN PATENT APPLICATION

(11) **EP 2 884 628 A2**
(43) Date of publication of application: **17.06.2015**
(21) Application number: 14194530.3
(22) Date of filing: 24.11.2014
(51) Int. Cl.: H02K 1/18

(54) **Spring assemblies for supporting a stator core in a stator frame**

(30) Priority: 13.12.2013 US 201314105363
(71) Applicant: Siemens Energy, Inc., Orlando, FL 32826-2399 (US)
(72) Inventor: Allen, David Thomas, Longwood, FL 32779 (US); Pettit, James F., Winter Springs, FL 32708 (US); Vitello, Travis John, Oviedo, FL 32765 (US)
(74) Representative: Maier, Daniel Oliver

(57) **Abstract**

A spring bar (112) that connects a stator core to a stator frame. The spring bar assembly (110) includes an attachment member (116) with a hole and a spring bar (112) that tapers from a central region and that includes a hole at each end that aligns with the hole in the attachment member (116). A bolt passes through the hole in the attachment member (116) and the hole in the spring bar (112), where the bolt is used to couple the attachment member (116) to the spring bar (112).

## Description

### BACKGROUND OF THE INVENTION

### Field of the Invention

The present invention relates generally to electric power generators and, more particularly, to a long-term solution for modifying a welded interface between a U-plate and a spring bar in an electric power generator.

### Discussion of the Related Art

High voltage generators for generating electricity as a power source are well known in the art. A power plant may include a gas turbine engine that rotates a shaft by combusting fuel and air in a combustion chamber to generate a working fluid that expands across blades that rotate, and in turn causes the shaft to rotate. The shaft of such an engine is coupled to an input shaft of a high voltage generator that is mounted to a rotor having a special configuration of coils. An electrical current provided in the rotor coil generates a magnetic flux around the coil, and as the rotor rotates, the magnetic flux interacts with windings in a stator core enclosing the rotor. The stator core windings may include interconnected stator bars that have a special configuration to reduce eddy currents in the core, which would otherwise generate significant heat and possibly damage various generator components.

A stator core for a high voltage generator is typically a stacked assembly of several thousand laminations of a relatively thin ferrous material, such as iron or steel. Each lamination is formed by configuring a plurality of pie-shaped plate sections, such as nine sections, to form a laminate plate ring, where each section is stamped from a piece of the ferrous material. A number of these laminate plate rings are then stacked on top of each other within a fixture where they are compressed together. The compressed stack of laminate plate rings are placed in a vacuum chamber where a resin is used to secure the rings together and where the resin is cured in a heated oven. The resulting stack of plate rings forms a single unit that is often referred to as a stator pack or donut. The stator packs are then assembled together to form the stator core in a generator frame. Once all of the stator packs are mounted within the generator frame, a series of through-bolts extend through aligned openings in the stator pack which are used to compress the stator packs together to form the final stator core. U.S. Patent No. 5,875,540 issued to Sargeant et al., assigned to the assignee of this invention and incorporated herein by reference, provides a more detailed discussion of the stator core assembly process discussed above.

When the rotor of an electric generator rotates, its magnetic field revolves in unison with the rotor. This rotating magnetic field exerts a cyclical force on the generator's stator core. This force, in turn, causes vibration in the core which is of concern in high speed, high power machines. A stator core of a machine having a two-pole rotor experiences an elliptical deformation that follows the rotation of the rotor during operation, with resulting vibrations that are at a frequency twice that of the rotational speed of the rotor. Cyclical vibrations from the resulting vibrations will be transmitted through the frame to the generator foundation, where the magnitude of the vibrations depends on the degree of isolation incorporated in the design of the support system.

Spring bars are typically used to resiliently support a stator core within a stator core frame. For example, a stator core may be mounted in a stator frame by means of resilient support or spring bars that extend axially between ribs of a statorframe and the stator core, as disclosed in U.S. Patent No. 2,811,659, issued to Barlow et al. on October 29, 1957 and incorporated herein by reference.

Because large torque amplification may be imposed on the spring bars and the connectors to the stator frame through the foundation, robust support structure and foundation bolting is desired. Known spring assemblies are susceptible to crack propagation in a welded joint that is between a U-plate and the spring bar. As stated above, the function of the spring bar is to provide the support coupling of the stator core to the stator frame. The function of the U-plate is to provide an interface in the stator frame for supporting the spring bar. The U-plates are welded on either side of a frame ring and are configured such that the spring bar is straddled by the U-plate. Thus, there is a need in the art for modifying the welded interface that is between the U-plate and the spring bar to minimize crack development and propagation. In particular, a way to perform *in-situ* modifications of the welded interface that is between the U-plate and the spring bar is needed in the art.

### SUMMARY OF THE INVENTION

In accordance with the teachings of the present invention, a spring bar assembly that connects a stator core to a stator frame is disclosed. The spring bar assembly includes an attachment member with a hole and a spring bar that tapers from a central region and that includes a hole at each end that aligns with the hole in the attachment member. A bolt passes through the hole in the attachment member and the hole in the spring bar, where the bolt is used to couple the attachment member to the spring bar.

Also disclosed is a method for replacing a spring bar assembly that connects a stator core to a stator frame. The method includes detaching the stator core from the stator frame and removing at least one spring bar that is part of the spring bar assembly. The method also includes affixing an attachment member to an outer face of a U-plate or an annular frame ring, where the attachment member includes a hole. The method further includes installing new spring bars using a bolt that is inserted into the hole in the attachment member and threading the bolt into the new spring bar, and reattaching the stator core to the stator frame.

Additional features of the present invention will become apparent from the following description and appended claims, taken in conjunction with the accompanying drawings.

### BRIEF DESCRIPTION OF THE DRAWINGS

Figure 1 is a cut-away perspective view of a prior art electric generator;
Figure 2a is a schematic side view of a known spring bar and a U-plate interface;
Figure 2b is a cut-away bottom view of the known spring bar;
Figure 3 is a side view of a known spring bar and U-plate welded interface;
Figure 4 is a cut-away side view of an exemplary spring assembly structure;
Figure 5 is an isometric view of a stator core that is connected to the stator frame by several spring assemblies;
Figure 6 is a flow chart diagram of a method for replacing known spring assemblies with exemplary spring assemblies;
Figure 7 is a cut-away side view of another spring assembly structure;
Figure 8 is an isometric top view of spring bar replacement assemblies with replacement spring bars;
Figure 9 is a cut-away side view of an exemplary spring bar replacement assembly with replacement spring bars;
Figure 10 is an isometric view of the replacement spring bar shown in Figure 8;
Figure 11 is a cut-away side view of another exemplary spring bar replacement assembly with replacement spring bars; and
Figure 12 is a flow chart diagram of another method for replacing known spring assemblies with exemplary spring assemblies.

### DETAILED DESCRIPTION OF THE EMBODIMENTS

The following discussion of the embodiments of the invention directed to a technique for eliminating a weld between a U-plate and a spring bar is merely exemplary in nature, and is in no way intended to limit the invention or its applications or uses.

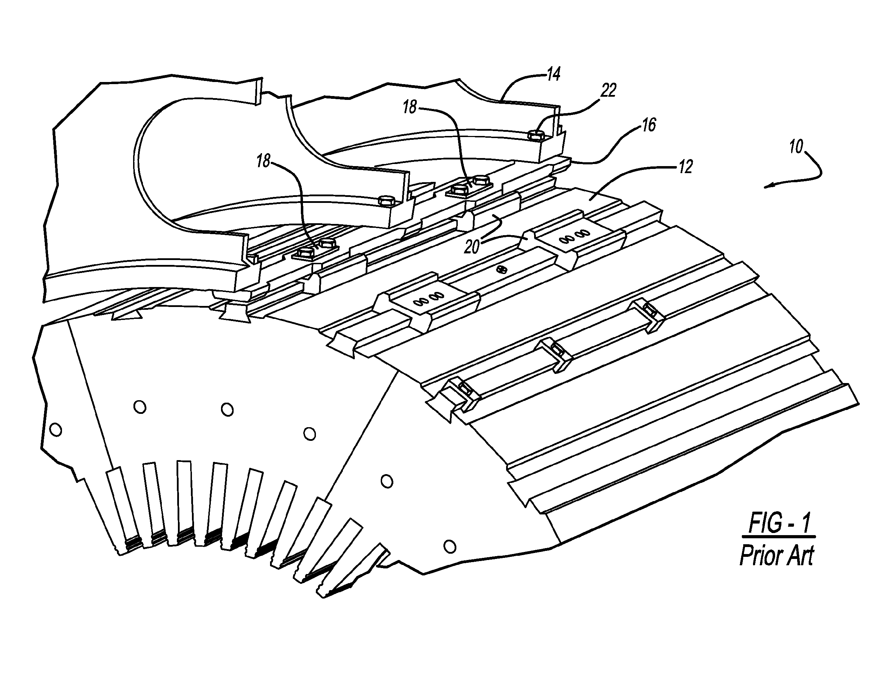

Figure 1 is a cut-away perspective view of a known electric generator 10 with a spring bar 16 that is mounted between a stator core 12 and a statorframe 14. The spring bar 16 extends the longitudinal length of the stator core 12, and the spring bar 16 is attached to the stator core 12 by mechanical connections 18. The mechanical connections 18 include brackets or key blocks 20 that are fixed on the stator core 12. A second set of mechanical connections 22 are used to connect the spring bar 16 to the stator frame 14. Other ways to connect the spring bars 16 to the stator core 12 and the stator frame 14 may be used, such as is described in U.S. Patent No. 4,425,523, issued to Detinko et al. on January 10, 1984 and incorporated herein by reference.

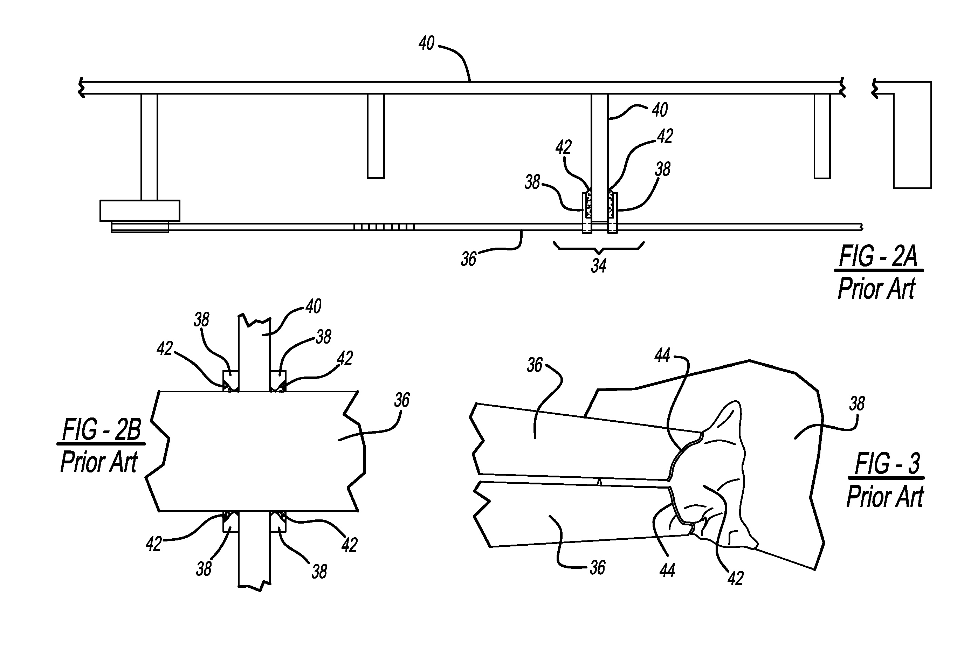

Figure 2a is a cut-away side view of a known spring assembly 34 that is connected to a stator frame 40 (stator core 12 not shown for clarity). The spring bar assembly 34 includes a spring bar 36 and U-plates 38. The U-plates 38 are affixed to the frame 40 and the spring bar 36 using welds 42 in a known manner.

Figure 2b is a cut-away bottom view of the known spring bar assembly 34 that shows the welds 42 that are between the spring bar 36 and the U-plates 38. As shown in Figure 2b, the portion of the welds 42 that is considered to be the spring bar side, i.e., the welds 42 that connect the spring bar 36 to the U-plates 38, are a known weak spot where cracks may occur.

Figure 3 is an exploded side view of the known spring bar 36 and the U-plate 38 welded interface. As shown, the welded region between the spring bar 36 and the U-plate 38 is known to be a location where cracks 44 may initiate and propagate. If the cracks 44 are left unaddressed, the spring assembly 34 that connects the stator core 12 to the stator frame 40 may fail. Thus, this area of weakness needs to be addressed.

While performing an *in-situ* repair that includes applying a thicker weld is known, such a repair is not considered a long-term solution because it does not change the coupling method of the spring bar 36 to the stator frame 40 at the U-plate interface and because rewelding the interface may cause distortion or damage to the spring bars 36 due to high heat and restraint. Described herein are structures and methods that are considered to be long-term solutions for addressing the problem of the welded connection at the interface of the spring bar 36 and the U-plate 38. The first method discussed below is an *in-situ* repair that may be performed without requiring the stator core 12 to be decoupled from the statorframe 40. The second method discussed below is a repair that is preferably performed with the stator core 12 removed from the frame 40 such that full access and replacement of the existing spring assemblies 34 is possible without the concern of contaminating the electric generator. Replacement of the spring assemblies 34 eliminates the welded connection discussed above.

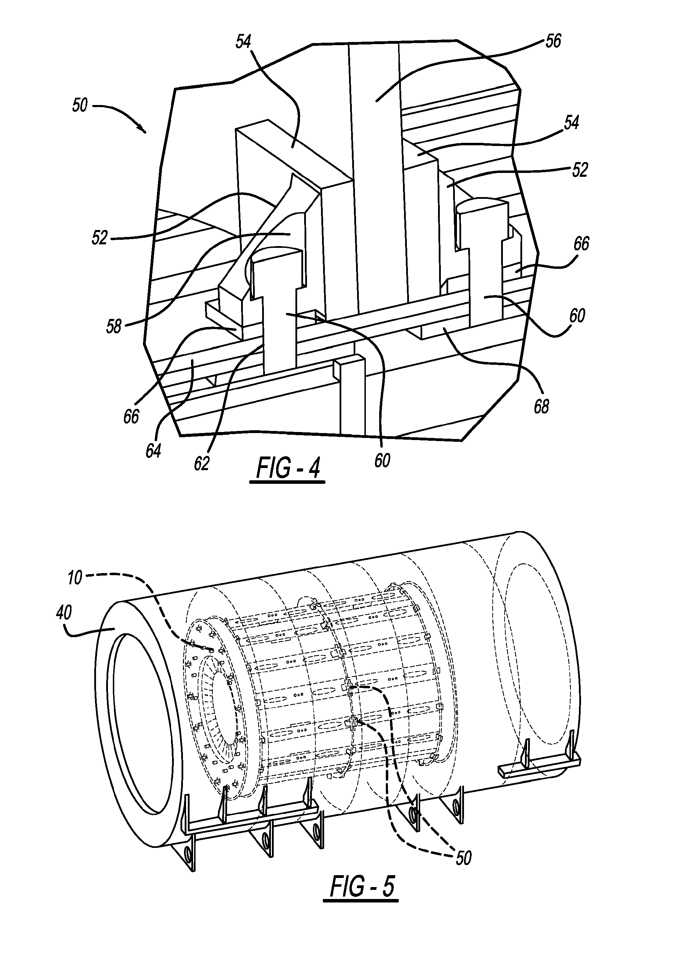

Figure 4 is a cut-away side view of a spring assembly structure 50 that may be used to provide an *in-situ* repair according to the first method. Figure 5 is an isometric view of the stator core 12 within the stator frame 40 that shows spring assemblies 50 that have been installed at the desired locations such that the spring assemblies 50 connect the stator core 12 to the stator frame 40, as discussed in more detail below. As shown in Figure 4, an attachment member 52 is welded to an outboard face of a U-plate 54 that is in turn welded to an inner frame ring 56. The attachment member 52 includes a bore or hole 58 that receives a bolt 60, for example, a 1.00-8 UNC 3A threaded socket head cap screw. The bolt 60 is also received by a bore 62 in spring bar 64. As shown, the spring bar 64 is a two-layer laminate, although laminate layers may or may not be used to create the spring bar 64. The bolt 60 is used to couple the attachment member 52 and the U-plate 54 to the spring bar 64, i.e., couple the spring assembly structure 50 to the inner frame ring 56. Thus, the welded connection that is described above that may crack is avoided.

Also included in the spring assembly structure 50 is a spacer plate 66 that transfers a clamping load of the bolt 60 to the spring bar 64, as described in more detail below. A threaded backing plate 68 is also included that has a central bore or hole to allow the bolt 60 to engage with and fasten to the backing plate 68 when tightened to a sufficient torque value.

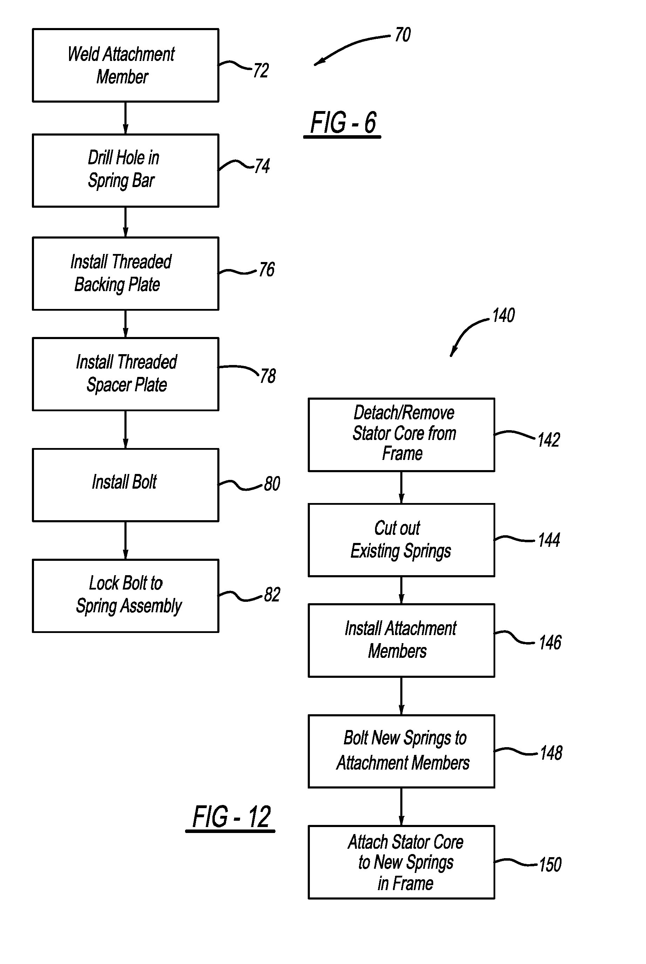

Figure 6 is a flow chart 70 of the first method that may be used to provide *in-situ* repair and replacement of existing spring assemblies 34 with spring assemblies 50. At box 72, the attachment member 52 is welded to the U-plate 54, which may be an existing U-plate from the original spring assembly 34. The attachment member 52 is welded on an outboard face of the U-plate 54 to provide a bolting surface through which the bolt 60 may be installed radially. Next, a single hole is drilled or otherwise introduced into the spring bar 64, which may be an existing spring bar 36 that is modified to create the hole 62 creating the spring bar 64, at box 74. The diameter of the hole 62 must be sufficient for the passage of the bolt 60 with adequate radial clearance to permit the bolt 60 to extend through the spring bar 64 in a radial direction without interference. As discussed herein, the radial direction is considered to be from an outer diameter of the stator core 12 to an axial center of the core 12.

At box 76 the threaded backing plate 68 is installed on a bottom side of the spring bar 64 that engages the bolt 60. The backing plate 68 may be made from any suitable material, including a standard carbon steel. The threaded backing plate 68 includes a threaded central hole that allows the bolt 60 to fasten to the backing plate 68 when tightened to a sufficient torque value, which is dependent upon the specific design of the stator core 12 and the stator frame 40. A spacer plate 66 that is provided on a top side of the spring bar 64 at box 78, i.e., the spacer plate is located between the spring bar 64 and the attachment member 52, and the bolt 60 is installed through the top of the attachment member 52, through the spacer plate 66, the spring bar 64 and the threaded backing plate 68 at box 80.

The spacer plate 66 is provided to transfer a clamping load of the bolt 60 to the spring bar 64 upon tightening of the bolt 60. The spacer plate 66 occupies a gap between the spring bar 64 and the attachment member 52 due to a designed clearance between a bottom surface of the attachment member 52 and the U-plate 54. This gap allows for a fillet weld to be applied to all contact edges between the attachment member 52 and the U-plate 54. The bottom surface of the attachment member 52 and the bottom surface of the U-plate 54 is considered to be the surface that is radially nearest to an axial centerline of the stator core 12.

The spacer plate 66 may be any desired height to permit gaps of different sizes in the radial direction. Furthermore, the spacer plate 66 may be shimmed as needed such that the space between the spring bar 64 and the attachment member 52 is fully occupied. The spacer plate 66 includes a through hole to allow the bolt 60 to pass through, as stated above. The through hole may be threaded such that it is capable of engaging the bolt 60 to meet the torque requirement necessary to properly couple the spring assembly 50 to the innerframe ring 56.

The bolt 60 is locked to the spring assembly 50 at box 82. Any suitable locking mechanism may be used, such as a locking cup washer of a suitable design, a tack weld between the bolt 60 and the attachment member 52, application of Loctite™ or an equivalent thread locking agent, etc. Suitable locking mechanisms may also be used to secure the bolt 60 to the threaded backing plate 68. Using the method discussed above permits multiple means for addressing locking of the various components, which may vary depending on the design used.

Figure 4, discussed above, shows the spring assemblies 50 on either side of the inner frame ring 56. However, the inner frame ring 56 and the U-plates 54 are not located at the ends of the stator frame 40, as the one or more inner frame rings 56 are generally centrally located within the stator frame 40.

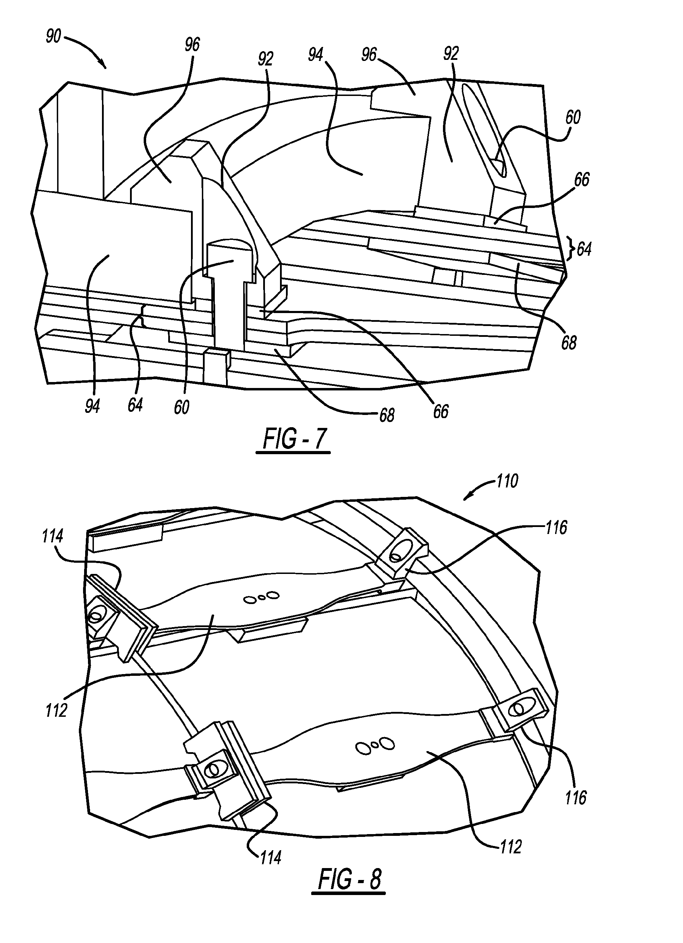

Figure 7 is a cut-away side view of a spring assembly 90 (also shown in Figure 5) that may be used near the ends of the stator core 10 and stator frame 40 connection, and that does not require the use of the U-plate 54. Like elements in Figure 7 refer to the same reference numerals in Figure 4. An attachment member 92 that includes an upper flange 96 extends over an annular lip 94 of an end frame ring. Thus, the attachment member 92 including the flange 96 is L-shaped, which provides access for applying a weld that extends all the way around contact edges of the annular lip 94. The attachment member 92 includes a through hole for the bolt 60 to pass through to the spring bar 64, the spacer plate 66 and the backing plate 68, and the attachment member 92, where the bolt 60 is affixed or locked using any suitable locking mechanism described above.

The method for installing the spring assembly 90 is essentially the same as the method for installing the spring assemblies 50 that is disclosed in the flow diagram of Figure 6, except that instead of welding the attachment member 92 to a U-plate, the L-shaped attachment member 92 is welded to the annular lip 94. Also, the spring assemblies 90 are located on a side of the end frame ring that includes the annular lip 94 whereas the spring assemblies 50 are located on both sides of the inner frame ring 56.

After the spring assemblies 50 and 90 are installed at each of the desired locations around the inner frame ring 56 and the annular lip 94, the bolted arrangement allows the stator core 12 to be coupled to the stator frame 40 without the risk of the crack propagation problem discussed above, and without requiring that the core 12 be removed. However, it is important to mask the core 12 to establish proper Foreign Material Exclusion (FME) due to the welding and machining efforts necessary for the installation.

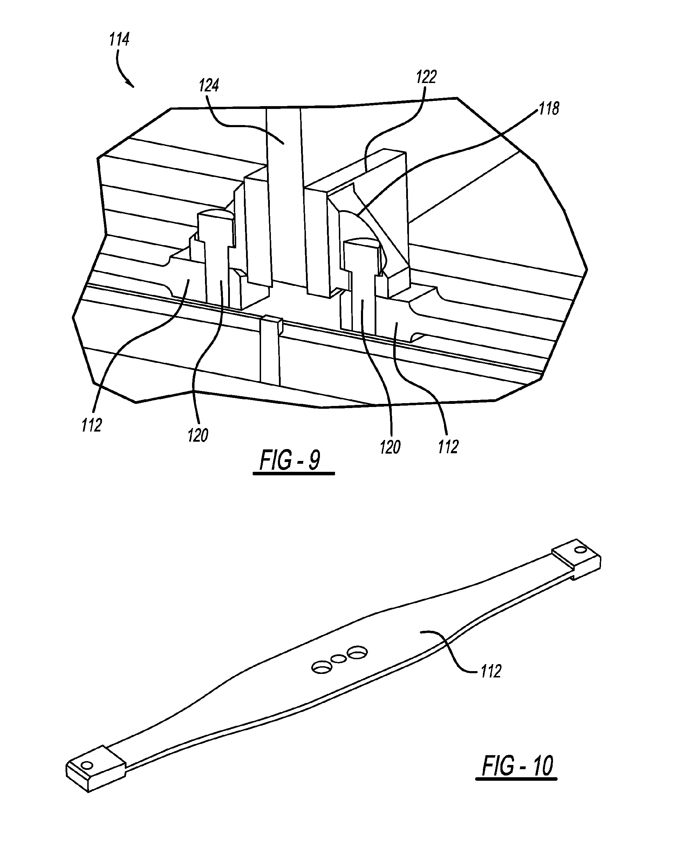

As stated above, a second method of eliminating the weld between U-plates and spring bars may be used. According to the second method, spring assemblies 34 including the springs 36, discussed above, may be replaced. Figure 8 is a top view of spring bar replacement assemblies 110 that include a spring bar 112, inner frame ring assemblies 114 and outer frame ring assemblies 116. Figure 9 is a cut-away side view of the inner frame ring assemblies 114 that include the spring bar 112, which are made of a carbon steel alloy or similar material and that may have a geometry that is similar to the geometry of the spring bar shown in Figure 10, discussed below.

An attachment member 118 that is welded to or otherwise affixed to a U-plate 122 is also included in the inner ring assembly 114. A bore or hole in the attachment member 118 and the spring bar 112 receives a bolt 120. Locking of the bolt may be achieved in the manner discussed above with respect to the bolt 60. The U-plate 122 is an existing U-plate that has already been welded to an inner frame ring 124 to affix the spring bar replacement assemblies 110 to an inner frame ring 124. The spring bars 112 may be affixed to the stator core 12 according to known methods, such as those described in 12/859,873 US 2012/0043861 entitled, "Methods and Apparatuses for Attaching a Stator Core to a Generator Frame" filed August 20, 2010 and incorporated herein by reference.

The spring bars 112 have a thicker cross-section in a radial direction at the bolting interface to provide sufficient threads for engaging the bolt 120. Typically the spring bars 112 are machined with a feature such as a radius to improve the distribution of stress at these locations. In an alternative embodiment, the spring bars 112 may extend as a continuous member axially across the length of the stator core 12. Figure 10 is an isometric view of the spring bar 112 which may be tapered such that the area with the widest cross-section is located centrally to each individual replacement spring bar 112 and corresponds to the location where the spring bar 112 is coupled to the stator core 12 at a key bar interface, as described in U.S. Patent No. 6,144,129 issued to Fuller et al. on November 07, 2000 and incorporated herein by reference. However, any suitable geometry may be used to distribute load to the frame 40.

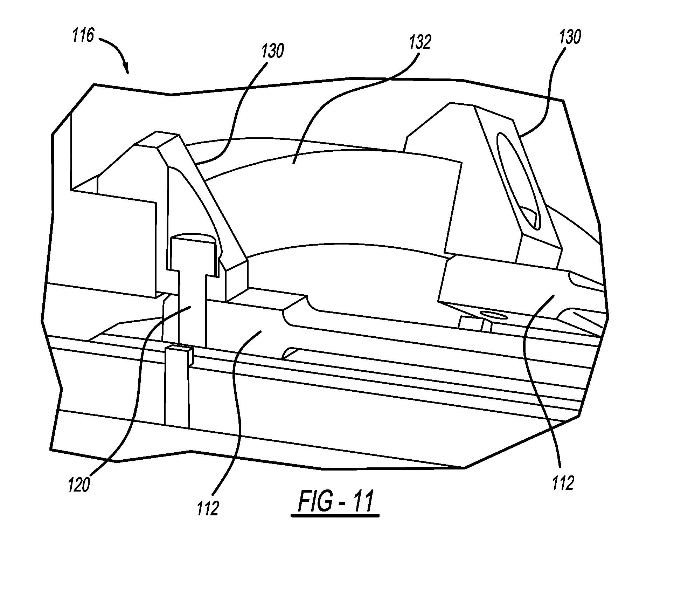

Figure 11 is a cut-away side view of the outer frame ring assemblies 116. Similar to the spring assemblies 90, the spring bars 112 are bolted to an L-shaped attachment member 130 that sits on an annular lip 132 of an outer frame ring using a bolt 120. While it is preferred that the replacement of the existing spring bars 34 with the spring bar assemblies 110 be performed while the stator core 12 is removed from the stator frame 40, it is possible to perform this replacement of the existing spring bars 34 with the core 12 supported on a fixture within the frame 40 by means of specialized tooling. However, it is preferred that the existing stator core 12 (wound or unwound) be removed from the frame 40 to provide access to all locations of the existing springs. Typically there are 15-18 total spring assemblies, depending on the unit and/or the generator style. When repairing the generator using the spring assemblies discussed herein, not all of the spring assemblies 34 must be replaced. It is sufficient to only replace enough of the spring assemblies 34 such that there is sufficient suspension and load support of the stator core 12 during both deadweight conditions and operational/vibration conditions.

Similar to the flow diagram 70 for providing the repair *in-situ,* the attachment members 122 are welded to the existing frame (either the inner frame ring 124 using the U-plate 122 or directly to the annular lip 132 of the outer frame ring at desired locations. Unlike the *in-situ* repair described in flow diagram 70, the existing spring bars 36 are replaced with the spring bars 112, which are a series of individual springs that only span the axial length between the inner frame assemblies 114 and the outer frame ring assemblies 116.

Figure 12 is a flow diagram 140 for replacing the spring bar assemblies 34 with the assemblies 110 discussed above. At box 142, the stator core 12 is removed from the stator frame 40, or is at least partially detached from the stator frame 40. If the stator core 12 is removed from the stator frame 40, space is cleared out such that the existing spring bars 36 may be accessed at box 144. Either some or all of the existing springs 36 are cut out at box 146, and individual attachment members 118 or 130 are installed at box 148 by welding the attachment members 118 or 130 to the U-plate 122 or the annular lip 132 of the outer frame ring, respectively. Next, new springs 112 are brought in and are bolted to the attachment members 118 or 130 using bolts 120 at box 150. According to this method, threading that is present in machined spring holes provides a way to directly thread the bolt 120 to the spring bar 112 without requiring a spacer plate and/or a threaded backing plate. Once the spring bars 112 are bolted to the attachment members 118 or 130 at the box 150, the stator core 12 is placed back in the stator frame 40 and is affixed to the spring bars 112 at the box 152.

It is possible to perform the method according to the flow diagram 140 while allowing the stator core 12 to remain attached to some of the springs 36 while other springs 36 are being cut out such that the springs 36 are cut out and replaced in steps. For example, the spring bars 36 at the one o'clock location of the stator core 12 may be cut out and replaced, then the seven o'clock location, where the process is continued in a star pattern until all of the spring bars 34 that are desired to be replaced are removed and the new assemblies 110 are installed.

Alternatively, tooling may be used to hold the stator core 12 in space so that all the springs 36 that need to be replaced are removed and the spring assemblies 110 are installed as discussed above. For example, a beam may be used that extends axially through the length of the stator core 12 after the rotor of the electric generator has been removed. The shape of the beam may be designed to complement the shape of the inner stator core 12.

The foregoing discussion discloses and describes merely exemplary embodiments of the present invention. One skilled in the art will readily recognize from such discussion and from the accompanying drawings and claims that various changes, modifications and variations can be made therein without departing from the spirit and scope of the invention as defined in the following claims.

## Claims

1. A spring bar assembly that connects a stator core to a stator frame, said spring bar assembly comprising:
an attachment member that is affixed to a frame ring of the stator frame, said attachment member including a hole therethrough;
a spring bar with a widest cross-section in a central region, said spring bar tapering from the central region to each end portion of the spring bar, said spring bar further including a hole at each end that aligns with the hole in the attachment member; and
a bolt that passes through the hole in the attachment member and the hole in one of the ends of the spring bar, wherein the bolt is used to couple the attachment member to the spring bar.

2. The spring bar assembly according to claim 1 further comprising a U-plate that is between the attachment member and the frame ring of the stator frame, said U-plate affixed to both the frame ring and the attachment member.

3. The spring bar assembly according to claim 1 wherein the spring bar includes a geometry that distributes load to the stator frame.

4. The spring bar assembly according to claim 1 wherein the spring bar is made of a carbon steel alloy or similar material.

5. The spring bar assembly according to claim 1 wherein the spring bar is coupled to the stator core at a key bar interface.

6. The spring bar assembly according to claim 1 wherein the spring bars include a thicker cross-section in a radial direction at the end portions of the spring bar to provide sufficient threading for engaging the bolt.

7. The spring bar assembly according to claim 1 where the spring bar extends the length between frame rings or extend as a continuous member across the length of the stator core.

8. A method for replacing a spring bar assembly that connects a stator core to a stator frame, said method comprising:
detaching the stator core from the stator frame;
removing at least one spring bar that is part of the spring bar assembly;
affixing an attachment member to an outer face of a U-plate of the spring assembly, said attachment member including a hole that is parallel to the outer face of the U-plate;
installing new spring bars by bolting the new spring bars to the attachment member using a bolt that is inserted into the hole in the attachment member and threading said bolt into the new spring bar; and
reattaching the stator core to the stator frame.

9. The method according to claim 8 wherein reattaching the stator core to the stator frame includes affixing the stator core to the new spring bars.

10. The method according to claim 8 wherein the new spring bars are widest in a central region and thickest at each opposing end such that sufficient threads are provided for engaging the bolt.

11. The method according to claim 8 wherein detaching the stator core includes removing the stator core from the stator frame.

12. The method according to claim 8 wherein detaching the stator core includes providing tooling to hold the stator core in space such that the at least one spring bar that is part of the spring bar assembly may be removed.

13. The method according to claim 8 wherein detaching the stator core includes partially detaching the stator core from the stator frame.

14. The method according to claim 8 wherein the attachment member is affixed to the U-plate by welding.

15. A method for replacing a spring bar assembly that connects a stator core to a stator frame, said method comprising:
detaching the stator core from the stator frame;
removing at least one spring bar that is part of the spring bar assembly;
affixing an attachment member to an annular frame ring of the stator frame, said attachment member including a hole;
installing new spring bars by bolting the new spring bars to the attachment member using a bolt that is inserted into the hole in the attachment member, and threading said bolt into the new spring bar; and
reattaching the stator core to the stator frame.

16. The method according to claim 15 wherein the attachment member is L-shaped.

17. The method according to claim 16 wherein the L-shaped attachment member sits on and is welded to an annular rim of the frame ring.

18. The method according to claim 15 wherein reattaching the stator core to the stator frame includes affixing the stator core to the new spring bars.

19. The method according to claim 15 wherein the new spring bars are widest in a central region and thickest at each end such that sufficient threads are provided for engaging the bolt.

20. The method according to claim 15 wherein detaching the stator core includes removing the stator core from the stator frame.

21. The method according to claim 15 wherein detaching the stator core includes providing tooling to hold the stator core in space such that the at least one spring bar that is part of the spring bar assembly may be removed.

22. The method according to claim 15 wherein detaching the stator core includes partially detaching the stator core from the stator frame.

23. The method according to claim 15 wherein the attachment member is affixed to the annular rim of the frame by welding.
